# EUROPEAN PATENT APPLICATION

(11) **EP 2 808 619 A1**
(43) Date of publication of application: **03.12.2014**
(21) Application number: 13741548.5
(22) Date of filing: 22.01.2013
(51) Int. Cl.: F24J 2/52

(54) **SUPPORT FOR FACETS**

(30) Priority: 23.01.2012 ES 201200057
(71) Applicant: Abengoa Solar New Technologies, S.A., 41018 Sevilla (ES)
(72) Inventor: CERÓN GARCIA, Francisco, 41014 Sevilla (ES); GÓMEZ MARTÍNEZ, Francisco Manuel, 41014 Sevilla (ES)
(74) Representative: Garcia-Cabrerizo y del Santo, Pedro Maria
(86) International application number: PCT/ES2013/000011
(87) International publication number: WO 2013/110832

(57) **Abstract**

Support for facets that maintains the facet (10) attached to the structure of a heliostat (20), which comprises a connecting plate (8), a threaded bolt (4), a fixed attachment of the connecting plate (8) to the facet (10) and a movable attachment between the connecting plate (8) and the threaded bolt (4).

The movable attachment enables assembling and disassembling the facet without having to reorient thereof as well as it enables to orientate the facet without having to place the facet.

## Description

### Technical field of the invention

The present invention describes a support system of the facets to a heliostat frame, of those used in solar thermoelectric power station.

### Background of the invention

A heliostat consists in a mirror-like reflecting surface, whose main aim is reflecting the solar radiation and to direct it towards an intended location. Said heliostats are orientable and to this end, usually they are provided with two drives to perform an individual tracking of the sun in two shafts. These drives enable the heliostat to perform both an azimuthal and an elevation movement.

Therefore, the heliostat is an element comprising a reflective surface, a support structure, an azimuth and elevation driving mechanism, a pedestal, with its according foundations, and a local control system.

The reflective surface is formed by a set of mirrors, which are disposed on a frame. Each mirror unit, together with its frame unit, it is known as facet. These set of all these facets is the one that subsequently will be assembled on the mobile structure of the heliostat (truss, arms and driver).

To concentrate the solar radiation, these reflecting mirrors are slightly curved, being the curvature radius one of the critical optical characteristics in the manufacture thereof, since it is required a great accuracy to direct the solar light properly down to the receiver.

Depending on the distance at which the receiver is placed, the mirrors present a specific curvature. To attain the highest possible performance, it is necessary to respect as exactly as possible the curvature parameters of the mirror surface.

It is also possible to manufacture heliostats made from flat facets and to orient them in such a way that the entire set of the heliostat adopts the desired curvature.

As far as faceted heliostats are concerned, we can find in the state of the art, different configurations for arranging said facets. Patent US4276872A discloses through its figures a faceted heliostat, where the facets composing said heliostats, are provided with a structure or support with a flat reflecting structure. Said facets are fixed to the heliostat support.

In addition, in patent ES8306688 the facets are held onto the structure either by attaching or by embedding them in foam.

In patent ES2351755, a manufacturing system for heliostat facets is described, constituted by a reflecting surface and a frame.

In the state of the art there are frame-type supports for facets, like the one described in patent US4373783 (25, figure 3) comprised by a front sheet and another back sheet (27, 29) parallel to each other with an internal structure made of beams (35) adhered or welded to said sheets.

Patent ES2326586 describes a heliostat facet configured from a flat structure, in which the reflecting body is curved. The support described for the facet consists in a frame with a series of points where the facet is supported. At each of the supporting points there can be arranged through-holes for connecting the facet to the heliostat support, so around each one of the through-holes a plurality of drawings can be performed, which provide with rigidity the area that surrounds the holes for a better transmission of the stresses from the holes to the remaining areas.

It is of the utmost importance to develop resistant, reliable heliostats having a high optical quality and at a low cost, so a thermosolar power station is as profitable as possible, given that the heliostats sector is responsible for approximately half of the total cost of these stations.

To this end, any system or invention that simplifies the assembly and manufacture of these mirrors, as well as increases its resistance and reliability, entails an extremely significant development for this type of technology.

In view of the foregoing, the object of the present invention is to develop a support for facets, which allows regulating the orientation of the facet within the heliostat in such a way that it simplifies the assembly of the mirrors and their replacement in the event that any of them breaks.

### Description of the invention

The present invention consists of a support for supporting the facets to the structure of a heliostat.

Unlike the state of the known art, the claimed support does not use any frame whatsoever for the facet, neither fixed nor welded to the heliostat. Instead, the support described by the invention has the property, compared to what has been disclosed up to now, of being a support that allows the movement and orientation of the facet within the heliostat set, without the need of having the mirror assembled.

The claimed support comprises a connecting plate, folded forming an "S" and a threaded bolt.

The connecting plate maintains the facet attached to the threaded bolt.

The threaded bolt maintains the connecting plate attached to the heliostat structure.

The connecting plate is provided with at least one drill hole at each of its horizontal surfaces, where it connects with the bolt and the facet.

The upper horizontal surface of the connecting plate is attached in a rigid manner to the facet, by means of a screw with a washer or equivalent attaching system that passes through the drill hole of the connecting plate.

In addition, the lower horizontal surface of the connecting plate is attached to the threaded bolt (introduced through the drill hole of the plate), by using a nut, a spherical washer and additional conical washer, at each of its extremities. I this way, the height of the bolt at which the plate is fixed can be regulated, and consequently, the orientation of the facet.

The bolt is attached to the heliostat structure by its lower extremity.

This support or attaching system allows regulating the orientation of the facet, adjusting the height at which the connecting plate is placed, in such a way that it can be adjusted without the need of having the facet attached, which simplifies considerably the process both of the original assembly, and the replacement of mirrors for maintenance purposes, since replacing a mirror does not imply having to orient all the facets again as happens currently.

This system is valid for the use of facets with flat or curved reflecting surfaces, but it entails an extraordinary saving in the heliostat cost if it is configured with flat facets, since it would not be necessary to curve any longer all the mirrors that constitute the concentrator surface, maintaining said concentrating capacity thanks to the orientation of the mirrors in the desired manner, either paraboloid or even spherical, for a better concentration of the solar radiation.

In addition, the flat reflecting surface facets are not affected by the astigmatism aberration effect from which indeed, suffer the facets having a spherical surface, and its small size can be maintained, which confers it with more advantages, given that with this support we can include as many facets as we wish to conform the heliostat assembly and to reorient them, very easily and at a low cost.

### Description of the drawings

For completing the description that is being performed and so the invention is better understood, a set of drawings are enclosed wherein by way of non-limiting illustration, the following has been represented:
- Figure 1: Facet support assembly
- Figure 2: Elevation and plant view of the connecting plate
- Figure 3: Threaded bolt
- Figure 4: Detail of the attachment between the connecting plate and the facet.
- Figure 5: Heliostat of oriented flat facets
- Figure 6: Heliostat of oriented cylindrical facets

### List of references:

1) Spherical washer
2) Conical washer
3) Nut
4) Threaded bolt
5) Washer
6) Hex head screw
7) Washer
8) Connecting plate
81) Drill hole in the upper horizontal surface of the connecting plate
82) Drill hole in the lower horizontal surface of the connecting plate 9) Nut
10) Facet
20) Heliostat structure

### Preferred embodiment of the invention

For a better understanding of the invention, next, based on the figures, a preferred embodiment of the facet support assembly will be described.

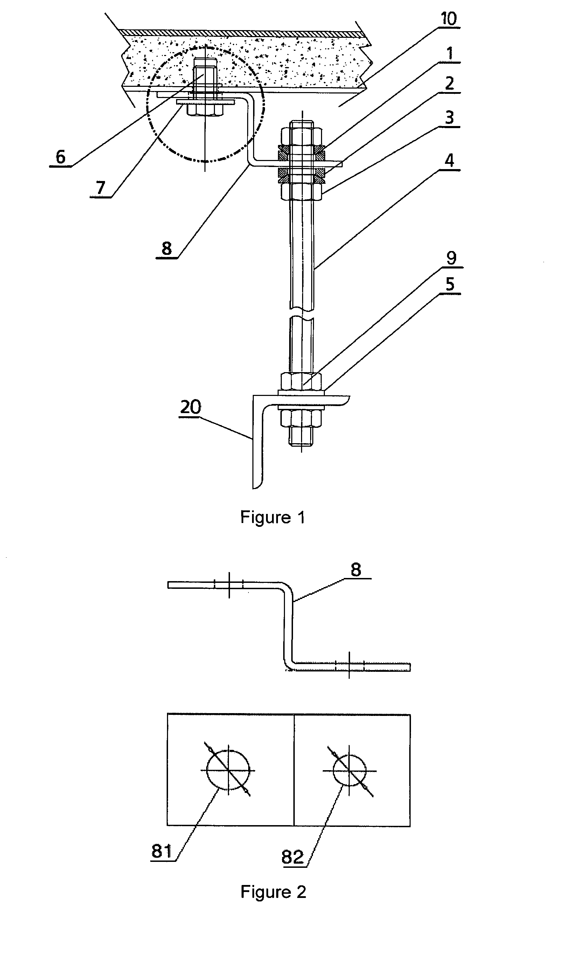

In figure 1, the invention assembly can be observed. The support maintains attached the facet (10) with the structure of the heliostat (20).

The claimed support comprises, as essential elements, a connecting plate (8) and a threaded bolt (4), as well as a fixed attachment of the connecting plate (8) to the facet and a movable attachment between the connecting plate (8) and the threaded bolt (4).

As it can be observed in figure 2, the connecting plate (8) is a plate folded forming a "S", which is provided with a drill hole (81, 82) at each of its two, upper and lower, horizontal surfaces. In a preferred embodiment, the drill holes have different diameters due to the different sizes of the bolt (4) and the screw (6).

The connecting plate (8) maintains attached the facet (10) to the threaded bolt (4).

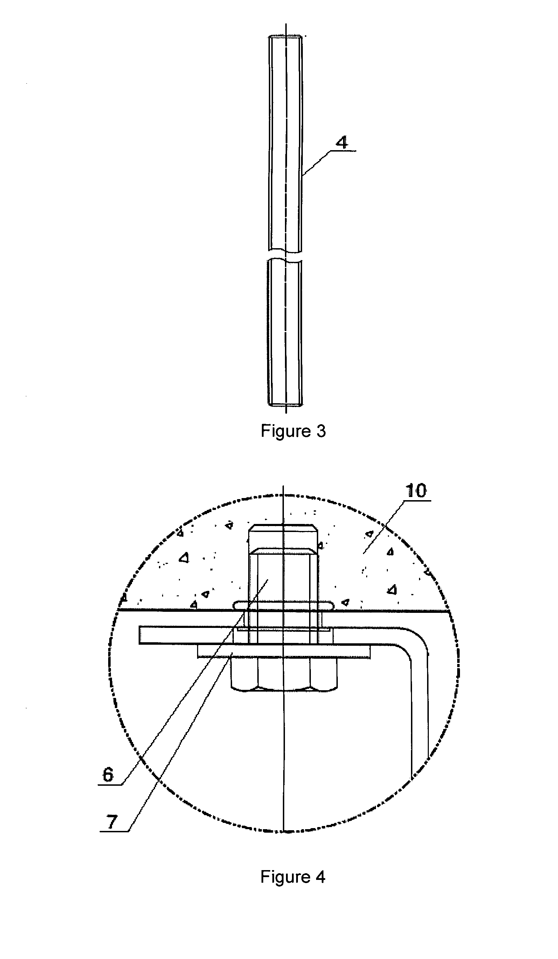

The attachment between the connecting plate (8) and the facet (10) is shown in detail in figure 4. As it can be observed, the connecting plate (8) is attached in a rigid manner to the facet (10) through its upper horizontal surface, by means of a hex head screw (6) with washer (7) that passes through the drill hole (81) of the connecting plate so it is threaded into the facet (10).

In figure 3, the threaded bolt (4) is shown. This threaded bolt (4) maintains attached the connecting plate (8) to the structure of the heliostat (20). It is a movable attachment.

As it can be observed in figure 1, to carry out that attachment, the threaded bolt (4) is introduced through the drill hole (82) of the lower surface of the connecting plate (8), fastening it to said plate (8) by both extremities, by means of a nut (3) a spherical washer (1) and a conical washer (2). The lower section of the threaded bolt (4) is attached to the structure by means of two nuts (9) and two washers (5).

The fact that this attachment is movable enables fixing the orientation of the facet within the heliostat without having to assemble the mirror, which facilitates significantly maintenance of the heliostat; given that whenever a mirror breaks, it is not necessary to adjust the orientation again, but rather to replace the damaged mirror directly with a new one. Moreover, the facet orientation remains intact by means of the movable attachment of the bolt (4) to the plate (8) and to carry out the maintenance it is only necessary to release the screw (7) or the equivalent fixed attachment that is installed between the plate (8) and the facet (10).

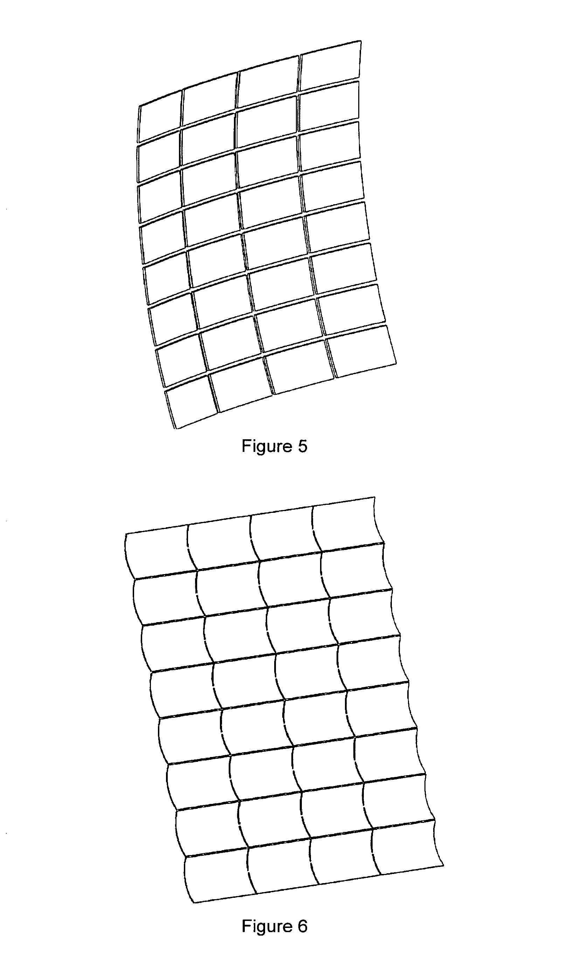

Figure 5 shows an overall view of the preferred embodiment of flat facets heliostat, wherein each one of said facets is oriented thanks to the movable attachment of the claimed support. Thanks to this support, it is verified how the desired curvature can be achieved in the heliostat and its manufacture costs can be reduced using flat facets instead of curved facets.

Moreover, a preferred embodiment can be described, like the one shown in figure 6, in which the heliostat is formed by facets with a cylindrical curvature and with this type of support the overall intended curvature is achieved by means of the independent and individual orientation of each one of the facets.

This support is specially designed for its application in the manufacture of facets for heliostats of solar concentration plants, but its extension to other fields of the industry requiring assemblies with similar characteristics it is not excluded.

## Claims

1. Support for facets (10) of heliostats which maintains attached the facet (10) to the structure of an heliostat (20), which comprises a connecting plate (8), a bolt (4), a fixed attachment of the connecting plate (8) to the facet (10) and a movable attachment between the connecting plate (8) and the bolt (4).

2. Support for facets (10) according to claim 1, **characterized in that** the connecting plate (8) is a shape folded forming an "S" that is provided on each of its upper and lower horizontal surfaces, with at least one drill hole (81, 82).

3. Support for facets (10) according to claim 2, **characterized in that** the fixed attachment between the connecting plate (8) and the facet (10) is performed along the upper horizontal surface of the connecting plate (8), by means of a screw (6) with washer (7) that passes through the drill hole (81) of the connecting plate so is threaded into the facet (10).

4. Support for facets (10) according to claim 2, **characterized in that** in the movable attachment between the connecting plate (8) and the bolt (4), a threaded bolt (4) with a nut (3) and two washers (1, 2) that are placed on the threaded bolt (4), are used, introducing the bolt (4) through the drill hole (82) of the lower surface of the connecting plate (8).

5. Support for facets (10) according to claim 4, **characterized in that** one washer is spherical (1) and the other washer is conical (2).

6. Support for facets (10) according to claim 2, **characterized in that** the attachment between the threaded bolt (4) and the structure of the heliostat (20) is performed by means of a nut (9) and a washer (7).

7. Heliostat of flat facets **characterized in that** the support attaching the flat facets to the structure of the heliostat is of the type described in claims 1-6.

8. Heliostat of cylindrical facets **characterized in that** the support that attaches the cylindrical facets to the structure of the heliostat is of the type described in claims 1-6.

## Amended claims

### Amended claims under Art. 19.1 PCT

**1.** Support for facets (10) of heliostats which maintains attached the facet (10) to the structure of an heliostat (20), which comprises a connecting plate (8), a bolt (4), a fixed attachment of the connecting plate (8) to the facet (10) and a movable attachment between the connecting plate (8) and the bolt (4); **characterized in that** the connecting plate (8) is a shape folded forming an "S" that is provided on each of its upper and lower horizontal surfaces, with at least one drill hole (81, 82).

**2.** Support for facets (10) according to claim 1, **characterized in that** the fixed attachment between the connecting plate (8) and the facet (10) is performed along the upper horizontal surface of the connecting plate (8), by means of a screw (6) with washer (7) that passes through the drill hole (81) of the connecting plate so is threaded into the facet (10).

**3.** Support for facets (10) according to claim 1, **characterized in that** in the movable attachment between the connecting plate (8) and the bolt (4), a threaded bolt (4) with a nut (3) and two washers (1, 2) that are placed on the threaded bolt (4), are used, introducing the bolt (4) through the drill hole (82) of the lower surface of the connecting plate (8).

**4.** Support for facets (10) according to claim 3, **characterized in that** one washer is spherical (1) and the other washer is conical (2).

**5.** Support for facets (10) according to claim 1, **characterized in that** the attachment between the threaded bolt (4) and the structure of the heliostat (20) is performed by means of a nut (9) and a washer (7).

**6.** Heliostat of flat facets **characterized in that** the support attaching the flat facets to the structure of the heliostat is of the type described in claims 1-5.

**7.** Heliostat of cylindrical facets **characterized in that** the support that attaches the cylindrical facets to the structure of the heliostat is of the type described in claims 1-5.

Statement under Art. 19.1 PCT
**Amendments made**

The new set of claims that has been filed includes the following amendments in respect of the originally filed application:
The number of claims has decreased from 8 to 7.
The contents of initial claim 2 have been included in claim 1.
Consequently, initial claim 2 has been removed.
The dependence of the claims has been corrected taking into account the above amendments.

Claim 1 amended; Claim 2 removed; Claims 3-8 not amended (except for their dependence)
Basis of the amendment: Claim 1 has been amended by introducing the contents of claim 2. The basis of this modification is found in claims 1 and 2 of the originally filed application.
